# EUROPEAN PATENT APPLICATION

(11) **EP 4 826 218 A1**
(43) Date of publication of application: **21.10.2026**
(21) Application number: 26172887.7
(22) Date of filing: 16.04.2026
(51) Int. Cl.: F01D 25/20, F02C 7/06, F02C 7/14, F02C 7/32, F02C 7/36

(54) **GAS TURBINE PROPULSION SYSTEM WITH ELECTRIC MOTOR CONTROLLER SYSTEM**

(30) Priority: 17.04.2025 US 202519181807
(71) Applicant: RTX Corporation, Farmington, CT 06032 (US)
(72) Inventor: AKIN, John, Charlotte (US); CHOE, Jung Muk, Glastonbury (US); CLARK, Thomas E., Wells (US)
(74) Representative: Dehns

(57) **Abstract**

A gas turbine engine (20) is provided that includes first and second spools (37, 39), an accessory gearbox (44), first and second electric motors (46A, 46B), and a motor controller system (58). The accessory gearbox is in drive communication with the first and second spools. The first and second electric motors are mounted on the accessory gearbox. The motor controller system includes a first MCU (60A), a second MCU (60B), and a lubrication system (62). The first MCU includes a first motor drive (64) and a first pump motor drive (66). The second MCU includes a second motor drive (68) and a second pump motor drive (70). The lubrication system includes a pump (72) with an electric pump motor. The lubrication system is configured to operate in a first mode wherein the pump is controlled by the first MCU and in a second mode wherein the pump is controlled by the second MCU.

## Description

### BACKGROUND OF THE INVENTION

### 1. Technical Field

The present disclosure relates to gas turbine engine propulsion systems in general and to lubrication control systems for gas turbine engine propulsion systems in particular.

### 2. Background Information

Hybrid-electric propulsion ("HEP") systems may utilize a motor controller unit ("MCU") that requires liquid cooling due to significant thermal loads. In addition, HEP systems often include an electric motor/generator that also requires liquid cooling and lubrication. Liquid cooling and lubrication can be achieved through various fluid mediums. Using the main engine oil supply as a fluid source for cooling and lubrication of electrical components such as an MCU may have certain drawbacks, including: a) an MCU may require cooling when the thermal engine of the HEP system is non-operational; or b) the oil temperature range of the thermal engine may not be favorable to the electronics of an MCU. In addition, it is often desirable to segregate the lubrication systems of the electric motors from the main engine oil system to prevent failures of novel electrical hardware from cascading into engine oil system.

### SUMMARY

According to an aspect of the present disclosure, a gas turbine engine is provided that includes a first spool, a second spool, an accessory gearbox, a first electric motor, a second electric motor, and a motor controller system. The accessory gearbox is in drive communication with the first spool and the second spool. The first electric motor and the second electric motor are mounted on the accessory gearbox. The motor controller system includes a first motor controller unit (MCU), a second MCU, and a lubrication system. The first MCU includes a first motor drive and a first pump motor drive. The first motor drive is in communication with the first electric motor. The second MCU includes a second motor drive and a second pump motor drive. The second motor drive is in communication with the second electric motor. The lubrication system includes a pump with an electric pump motor. The lubrication system is configured to operate in a first mode wherein the pump of the lubrication system is controlled by the first MCU and in a second mode wherein the pump of the lubrication system is controlled by the second MCU.

In any of the aspects or embodiments described above and herein, the lubrication system may be configured to direct a flow of lubricant through the first MCU and through the second MCU.

In any of the aspects or embodiments described above and herein, the lubrication system may be configured to control the pump to produce a flow of lubricant, and to direct a first portion of the flow of lubricant through the first MCU and a second portion of the flow of lubricant through the second MCU.

In any of the aspects or embodiments described above and herein, the lubrication system may be configured to pass the flow of lubricant from the pump through a heat exchanger prior to the first portion of the flow of lubricant passing through the first MCU and the second portion of the flow of lubricant passing through the second MCU.

In any of the aspects or embodiments described above and herein, the heat exchanger may utilize engine bypass air as a coolant.

In any of the aspects or embodiments described above and herein, the lubrication system may include a supply conduit system, a scavenge conduit system, and a lubricant tank. The supply conduit system may be configured to contain the flow of lubricant from the pump to the heat exchanger, and from the heat exchanger to the first MCU and to the second MCU, from the first MCU to the pump, from the second MCU to the pump, from the pump to the lubricant tank, and from the lubricant tank to the pump.

In any of the aspects or embodiments described above and herein, the electric pump motor may be a single wound electric motor, or a dual wound electric motor, or the like.

In any of the aspects or embodiments described above and herein, the first electric motor may be in drive communication with the first spool, and the second electric motor may be in drive communication with the second spool.

In any of the aspects or embodiments described above and herein, the first spool may include a high pressure compressor section and a high pressure turbine section, and the second spool may include a low pressure compressor section and a low pressure turbine section.

According to an aspect of the present disclosure, a gas turbine engine is provided that includes a first spool, a second spool, an accessory gearbox, a first electric motor, a second electric motor, and a motor controller system. The accessory gearbox is in drive communication with the first and second spools. The first and second electric motors are engaged with the accessory gearbox. The motor controller system includes a first motor controller unit (FMCU), a second motor controller unit (SMCU), and a lubrication system. The FMCU includes a first motor drive and an FMCU pump motor drive. The first motor drive is in communication with the first electric motor. The SMCU includes a second motor drive and an SMCU pump motor drive. The second motor drive is in communication with the second electric motor. The lubrication system includes a first pump with a first electric pump motor and a second pump with a second electric pump motor. The lubrication system includes a first lubrication circuit wherein the FMCU pump motor drive is configured to control the first electric pump motor, and a second lubrication circuit wherein the SMCU pump motor drive is configured to control the second electric pump motor.

In any of the aspects or embodiments described above and herein, the FMCU pump motor drive may include a first FMCU pump motor drive and a second FMCU pump motor drive, and the SMCU pump motor drive may include a first SMCU pump motor drive and a second SMCU pump motor drive. In any of the aspects or embodiments described above and herein, the lubrication system may be configured to operate within the first lubrication circuit in a first mode wherein the first pump of the lubrication system is controlled by the first FMCU pump motor drive, and in a second mode wherein the first pump of the lubrication system is controlled by the first SMCU pump motor drive.

In any of the aspects or embodiments described above and herein, the lubrication system may be configured to control the first pump to produce a first flow of lubricant, and to direct a first portion of the first flow of lubricant through the FMCU and a second portion of the first flow of lubricant through the SMCU.

In any of the aspects or embodiments described above and herein, the lubrication system may be configured to pass the first flow of lubricant from the first pump through a first heat exchanger prior to the first portion of the first flow of lubricant passing through the FMCU and the second portion of the first flow of lubricant passing through the SMCU.

In any of the aspects or embodiments described above and herein, in the first lubrication circuit the first FMCU pump motor drive and the first SMCU pump motor drive may each be configured to control the first electric pump motor, and in the second lubrication circuit the second FMCU pump motor drive and the second SMCU pump motor drive may each be configured to control the second electric pump motor.

In any of the aspects or embodiments described above and herein, the lubrication system may be configured to operate within the first lubrication circuit in a first mode wherein the first pump of the lubrication system is controlled by the first FMCU pump motor drive, and in a second mode wherein the first pump of the lubrication system is controlled by the first SMCU pump motor drive.

In any of the aspects or embodiments described above and herein, the lubrication system may be configured to operate within the second lubrication circuit in a first mode wherein the second pump of the lubrication system is controlled by the second FMCU pump motor drive, and in a second mode wherein the second pump of the lubrication system is controlled by the second SMCU pump motor drive.

According to an aspect of the present disclosure, a gas turbine engine is provided that includes a first spool, a second spool, an accessory gearbox, a first electric motor, a second electric motor, and a motor controller system. The accessory gearbox is in drive communication with the first and second spools. The first and second electric motors are engaged with the accessory gearbox. The motor controller system includes a first motor controller unit (FMCU), a second motor controller unit (SMCU), and a lubrication system. The FMCU includes a first motor drive, a first FMCU pump motor drive, and a second FMCU pump motor drive. The first motor drive is in communication with the first electric motor. The SMCU includes a second motor drive, a first SMCU pump motor drive, and a second SMCU pump motor drive. The second motor drive is in communication with the second electric motor. The lubrication system includes a first pump with a first electric pump motor, a second pump with a second electric pump motor, a third pump with a third electric pump motor, and a fourth pump with a fourth electric pump motor. The lubrication system includes a first lubrication circuit wherein the first FMCU pump motor drive is configured to control the first electric pump motor and the first SMCU pump motor drive is configured to control the second electric pump motor, and a second lubrication circuit wherein the second FMCU pump motor drive is configured to control the third electric pump motor, and the second SMCU pump motor drive is configured to control the fourth electric pump motor.

In any of the aspects or embodiments described above and herein, the first electric pump motor, the second electric pump motor, the third electric pump motor, and the fourth electric pump motor are each a single wound electric motor.

The foregoing features and elements may be combined in various combinations without exclusivity, unless expressly indicated otherwise. For example, aspects and/or embodiments of the present disclosure may include any one or more of the individual features or elements disclosed above and/or below alone or in any combination thereof. These features and elements as well as the operation thereof will become more apparent in light of the following description and the accompanying drawings. The following description and drawings are intended to be exemplary in nature and non-limiting.

### BRIEF DESCRIPTION OF THE DRAWINGS

FIG. 1 is a diagrammatic sectional view of a gas turbine engine embodiment.
FIG. 2 is a diagrammatic sectional view of a hybrid-electric propulsion ("HEP") system that includes a gas turbine engine like shown in FIG. 1.
FIG. 3 is a diagrammatic view of an accessory gear box engaged with a high pressure (HP) spool and a low pressure (LP) spool.
FIG. 4 is a schematic diagram of a present disclosure motor controller system embodiment.
FIG. 5 is a schematic diagram of a present disclosure motor controller system embodiment.
FIG. 6 is a schematic diagram of a present disclosure motor controller system embodiment.

### DETAILED DESCRIPTION

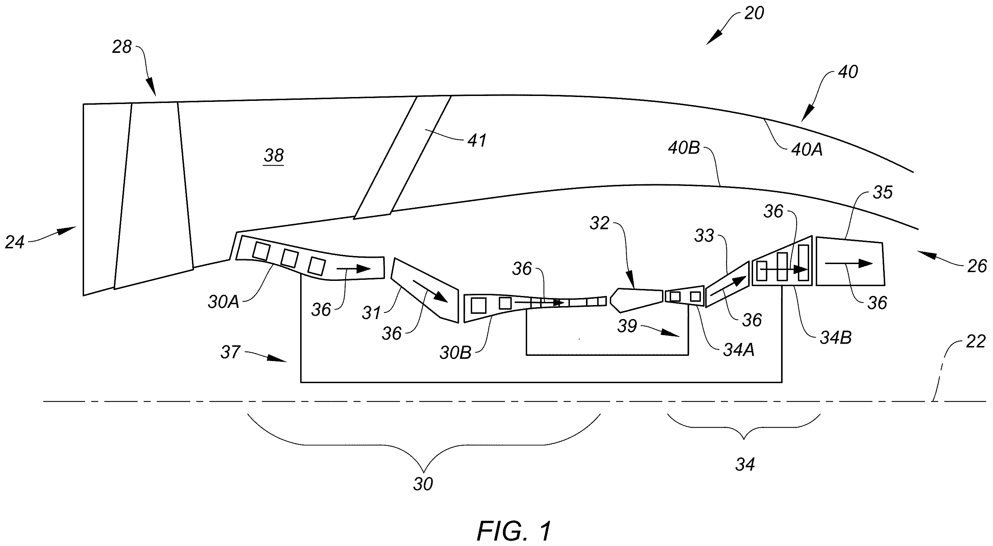

FIG. 1 shows a diagrammatic view of a gas turbine engine 20. The gas turbine engine 20 extends along an axial centerline 22 between an upstream airflow inlet 24 and a downstream exhaust 26. The gas turbine engine 20 includes a fan section 28, a compressor section 30, a combustion section 32, and a turbine section 34. The compressor section 30 includes a low-pressure compressor (LPC 30A) and a high-pressure compressor (HPC 30B). The turbine section 34 includes a high-pressure turbine (HPT 34A) and a low-pressure turbine (LPT 34B). The engine sections are arranged sequentially along the centerline 22 within an engine housing. The LPC 30A and the LPT 34B are connected to one another as part of a low pressure spool (LP spool 37). The HPC 30B and the HPT 34A are connected to one another as part of a high pressure spool (HP spool 39).

Air entering the gas turbine engine 20 through the airflow inlet 24 (forward of the fan section 28) is bisected between a core gas path 36 and a fan bypass air path 38. A portion of the air entering the gas turbine engine 20 passes through the fan section 28 and enters the core gas path 36. The core gas path 36 extends through the LPC 30A, the intermediate case 31, the HPC 30B, the combustion section 32, the HPT 34A, the mid-turbine frame 33, the LPT 34B, and the turbine exhaust case 35. Core gas exiting the LPT 34B exits the engine 20 via the exhaust 26. The remainder of the air entering the gas turbine engine 20 passes through the fan section 28 and enters the fan bypass air path 38 which is disposed radially outside of the core of the engine 20. The gas turbine engine 20 is diagrammatically shown in FIG. 1 engaged with a nacelle structure 40. The nacelle structure 40 is configured to provide an annular region radially outside of the core of the gas turbine engine 20. The annular region (which serves as the fan bypass air path 38) is defined by an outer radial structure 40A and an inner radial structure 40B. The outer radial structure 40A defines the outer radial boundary of the fan bypass air path 38 and the inner radial structure 40B defines the inner radial boundary of the fan bypass air path 38. In some embodiments, a fan exit guide vane (FEGV 41) extends between the inner radial structure 40B and the outer radial structure 40A.

The gas turbine engine 20 configuration diagrammatically shown in FIG. 1 is an example provided to facilitate the description herein. The present disclosure may be implemented in a variety of different gas turbine engine configurations and is not therefore limited to the gas turbine engine 20 configuration diagrammatically shown in FIG. 1. For example, in some gas turbine engine configurations the fan section 28 may be connected to a geared architecture (not shown) through a fan shaft. As another example, embodiments of the present disclosure may be utilized with gas turbine engines having a reverse flow architecture or an open rotor architecture. As yet another example, the present disclosure is described herein in terms of a gas turbine engine with a dual spool architecture (e.g., LP spool 37 and HP spool 39). Embodiments of the present disclosure may be utilized with gas turbine engines having more than two spools or engine shafts. In addition, the nacelle structure diagrammatically shown in FIG. 1 is provided to facilitate the description herein and the present disclosure is not limited to this nacelle structure example.

The terms "forward" and "aft" are used herein to indicate the relative position of a component or surface. In an axial gas turbine engine 20 such as that shown in FIG. 1, the fan section 28 is forward of the compressor section 30 and the turbine section 34 is aft of the compressor section 30. The terms "inner radial" and "outer radial" refer to relative radial positions from the engine centerline 22. An inner radial component or path is disposed radially closer to the engine centerline 22 than an outer radial component or path.

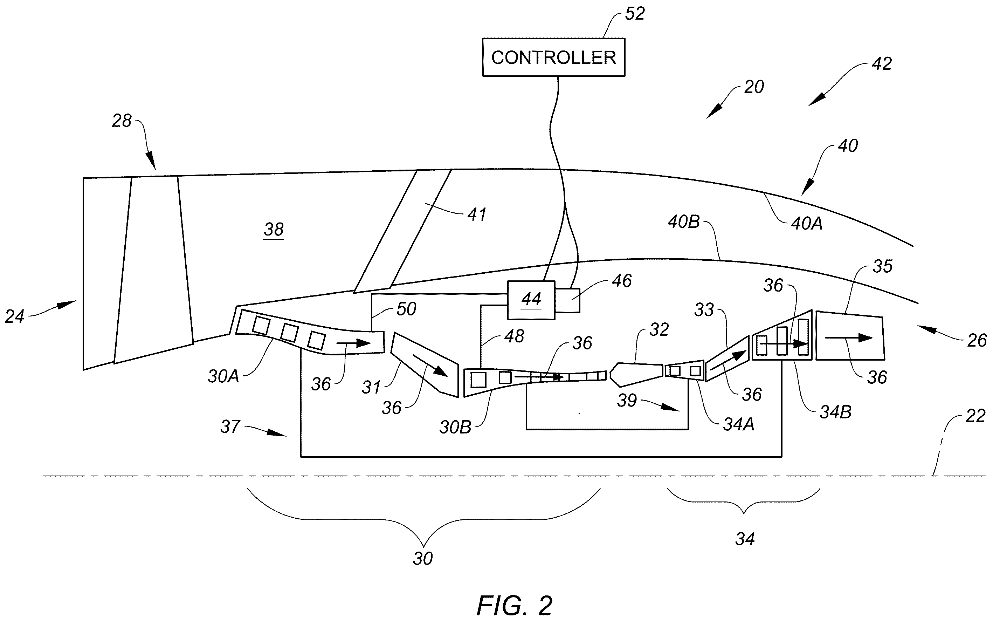

FIG. 2 diagrammatically illustrates a hybrid-electric propulsion ("HEP") system 42 that includes a gas turbine engine 20 like shown in FIG. 1, as well as an accessory gearbox 44 and an electric motor 46. A first mechanical arrangement (e.g., a first tower shaft 48) is diagrammatically shown connecting the accessory gearbox 44 to the HP spool 39 and a second mechanical arrangement (e.g., a second tower shaft 50) is diagrammatically shown connecting the accessory gearbox 44 to the LP spool 37. The present disclosure is not limited to using tower shafts for mechanical engagement with a spool. In some embodiments (e.g., like that shown in FIG. 2), the present disclosure may include a controller 52 in communication with system components described herein for control purposes.

The controller 52 may include any type of computing device, computational circuit, processor(s), CPU, computer, or the like capable of executing a series of instructions that are stored in memory. The instructions may include an operating system, and/or executable software modules such as program files, system data, buffers, drivers, utilities, and the like. The executable instructions may apply to any functionality described herein to accomplish the same algorithmically and/or coordination of system components. The controller 52 may include or may be in communication with one or more memory devices. The present disclosure is not limited to any particular type of memory device, and the memory device may store instructions and/or data in a non-transitory manner. Examples of memory devices that may be used include read-only memory, random access memory, volatile memory, non-volatile memory, static memory, dynamic memory, flash memory, cache memory, and/or any device that stores digital information. The controller 52 may be an independent component or may be integrated within another controller present with the gas turbine engine 20 (or aircraft). For example, the controller 52 may coordinate and/or be in communication with separate system controllers such as a FADEC (Full Authority Digital Engine Control) or an EEC (Electronic Engine Control). The present disclosure is not limited to any particular controller architecture unless specifically stated herein.

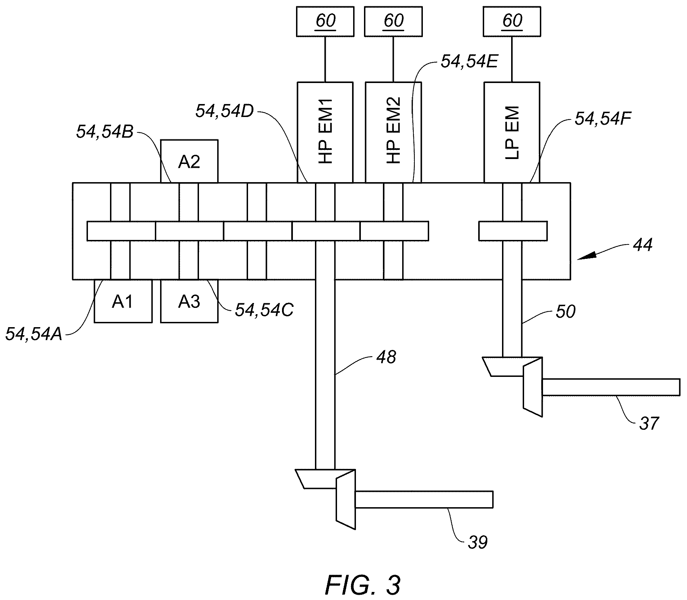

FIG. 3 diagrammatically illustrates an example of an accessory gearbox 44 with a plurality of accessories (A1, A2, A3), a pair of HP electric motors (HP EM1 and HP EM2), an LP electric motor (LP EM), and a plurality of accessory docks 54. Each accessory or electric motor is mounted on a respective accessory dock of the accessory gearbox 44; e.g., a first accessory (A1) mounted on a first accessory dock 54A, a second accessory (A2) mounted on a second accessory dock 54B, a third accessory (A3) mounted on a third accessory dock 54C, a first HP electric motor (HP EM1) mounted on a fourth accessory dock 54D, a second HP electric motor (HP EM2) mounted on a fifth accessory dock 54E, and the LP electric motor / generator (LP EM) mounted on a sixth accessory dock 54F. Non-limiting examples of an accessory include, a fuel pump, a hydraulic pump, an oil pump, or the like. Each electric motor HP EM1, HP EM2, LP EM is configured to and can be controlled to operate in a first mode as an electric motor that produces shaft rotational drive (e.g., torque) and in a second mode as a generator that produces electrical energy; e.g., electric current.

In the example shown in FIG. 3, the HP electric motors and the accessories are mounted on accessory docks 54 that are engaged with the HP spool 39 by an internal gear arrangement. Hence, an HP electric motor HP EM1, HP EM2 and/or an accessory A1, A2, A3 may receive rotational drive from the HP spool 39 or may produce rotational drive that is provided to the HP spool 39. Also in FIG. 3, the LP electric motor LP EM is mounted on an accessory dock 54F that is engaged with the LP spool 37. Hence, the LP electric motor LP EM may receive rotational drive from the LP spool 37 or may produce rotational drive that is provided to the LP spool 37. The arrangement of accessories, electric motors, and accessory docks is provided as a non-limiting example.

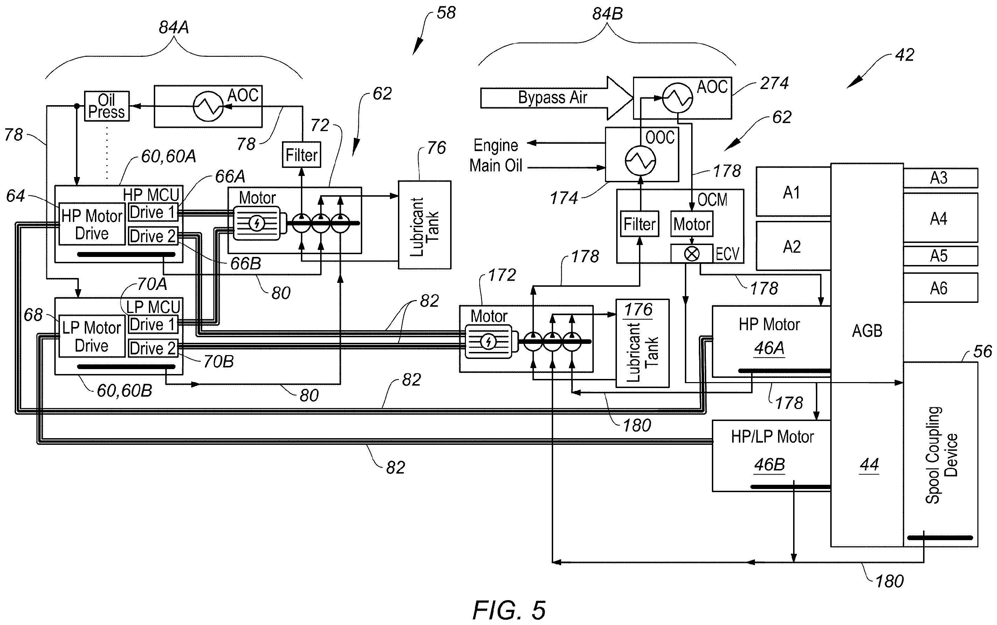

Referring to FIG. 5, in some present disclosure HEP system 42 embodiments, the HEP system 42 may include a spool coupling device 56. U.S. Patent Application No. 19/170,922, "Gas Turbine Propulsion System with Spool Coupling Device", filed April 4, 2025, which is hereby incorporated by reference in its entirety, discloses a gas turbine propulsion system with a spool coupling device 56 that allows an electric motor to be driven by, or to provide power to, a first engine spool or a second engine spool. In this arrangement, the first spool (e.g., the LP spool 37) is engaged with the spool coupling device 56 and the second spool (e.g., the HP spool 39) is engaged with the accessory gearbox 44. An output shaft of the accessory gearbox 44 is coupled with an input shaft of the spool coupling device 56. The spool coupling device 56 includes a transmission that is in drive communication with an accessory dock of the spool coupling device 56. The transmission is controllable to allow an accessory (e.g., an electric motor) mounted on the accessory dock of the spool coupling device 56 to be driven by the HP spool 39 or by the LP spool 37.

Present disclosure HEP systems 42 include a motor controller system 58 that includes motor controller units (MCU 60) and a lubrication system 62. The MCUs 60 are configured as multi-channel devices that are configured to control a respective electric motor 46 and to control aspects of the lubrication system 62. A first channel of an MCU 60 configured to control a respective electric motor 46 may include a drive for the respective electric motor 46. The drive may be configured to control the output of the electric motor 46 when it is operating as an electric motor (e.g., the output may include the motor shaft direction, speed, and torque), and control the output of the electric motor when it is operating as an electric generator (e.g., output including voltage and current). A second channel of the MCU 60 is configured to control aspects of the lubrication system 62. The second channel may include a pump motor drive for controlling an electrically powered pump that is used to circulate a lubricant / cooling fluid within the lubrication system 62.

The lubrication system 62 may include components such as a fluid pump, a heat exchanger, a supply conduit system, a scavenge conduit system, or similar components, and/or any combination thereof. In some embodiments, the lubrication system may include a fluid lubricant tank. The present disclosure is not, however, limited to any particular lubrication system 62 configuration; e.g., a fluid lubricant tank may not be required.

The fluid pump includes a pump driven by an electric motor. Non-limiting examples of acceptable electric motor types that may be used to drive the pump include an AC current induction motor, a permanent magnet synchronous motor (PMSM), a brushless DC motor, or the like. The pump electric motor may be configured as a single wound motor or as a dual wound motor.

The heat exchanger is configured to receive the lubricant and a second fluid and transfer thermal energy from the lubricant to the second fluid. An example of an acceptable heat exchanger is an air-oil heat exchanger ("AOC") wherein the second fluid is ambient air. Another example of an acceptable heat exchanger is an oil-oil heat exchanger ("OOC") wherein the second fluid is an engine oil, or other liquid. The present disclosure is not limited to any particular heat exchanger configuration.

The supply conduit system and the scavenge conduit system include fluid flow conduits that are configured to contain fluid flow and permit the lubricant flow to cycle to and from components of the lubrication system 62 and the motor controller system 58. The supply conduit system and/or the scavenge conduit system may include flow components including valves, filters, de-aerators, and the like. When included, the lubricant tank may be a reservoir sized to hold a volume of fluid lubricant that is adequate for the lubrication system 62 application. In some embodiments, a lubricant tank or other reservoir may be integrated with another system component; e.g., a pump may include a reservoir.

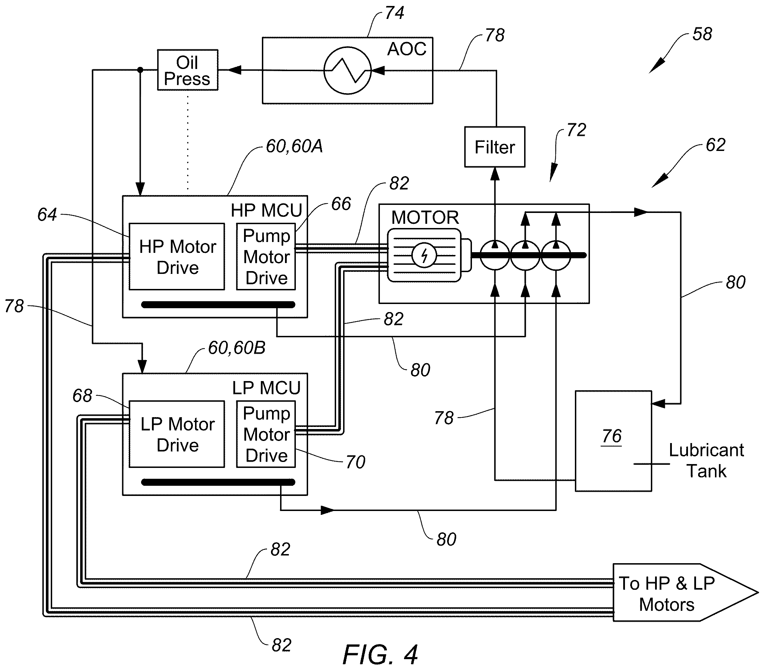

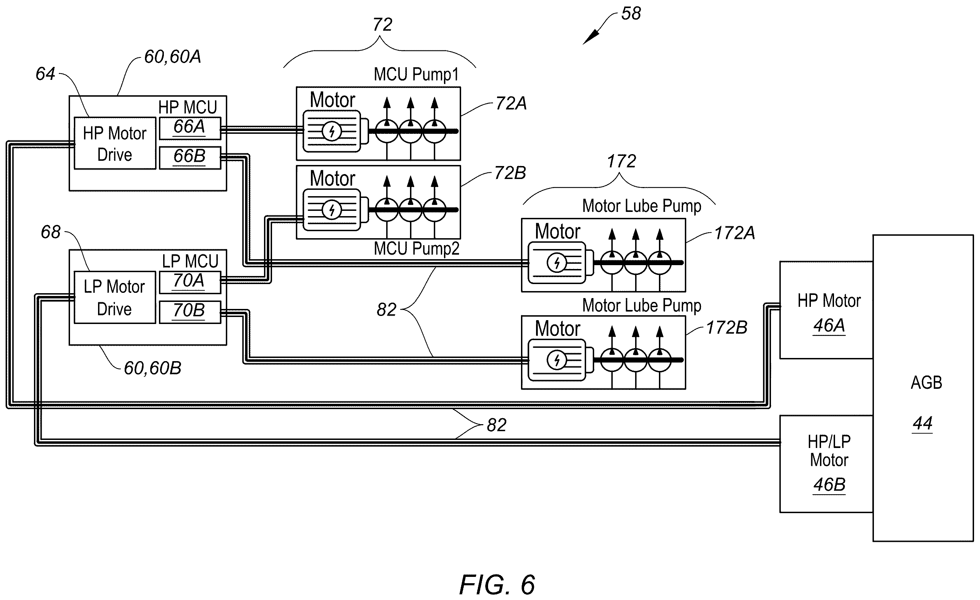

An example of a present disclosure motor controller system 58 is schematically shown in FIG. 4. In this embodiment, the motor controller system 58 includes a first motor controller unit that is associated with an electric motor engaged with the HP spool 39 of the gas turbine engine 20. This motor controller unit will be referred to as the "HP MCU 60A". The HP MCU 60A has a multichannel configuration that includes a first channel for the HP motor drive 64 and a second channel for the pump motor drive 66. The motor controller system 58 further includes a second motor controller unit that is associated with an electric motor / generator engaged with the LP spool 37 of the gas turbine engine 20. This motor controller unit will be referred to as the "LP MCU 60B". The LP MCU 60B has a multichannel configuration that includes a first channel for the LP motor drive 68 and a second channel for the pump motor drive 70. The non-limiting example shown in FIG. 4 (and the examples shown in FIGS. 5 and 6) illustrate a single MCU engaged with the HP motor or the LP motor. In some embodiments, more than one MCU may be engaged with the HP motor or more than one MCU may be engaged with the LP motor.

In this motor controller system 58 example, the lubrication system 62 includes a pump 72, a heat exchanger 74, a lubricant tank 76, a supply conduit system 78, and a scavenge conduit system 80. The supply conduit system 78 is shown including a filter and a pressure valve but they are not required.

Still referring to FIG. 4, within the supply conduit system 78, the electric pump 72 draws a flow of lubricant from the lubricant tank 76 and directs it to the heat exchanger 74. Between the pump 72 and the heat exchanger 74, the flow of lubricant passes through the filter. The flow of lubricant exiting the heat exchanger 74 passes through the pressure valve. A portion of the flow of lubricant is directed to the HP MCU 60A and the remainder of the flow of oil is directed to the LP MCU 60B. Within the HP MCU 60A and the LP MCU 60B, the lubricant functions as a coolant permitting a transfer of thermal energy from the first channel drives (e.g., the "HP motor drive 64" and the "LP motor drive 68") and the second channel pump motor drives 66, 70. Within the scavenge conduit system 80, the pump 72 is used to draw the flow of lubricant from the HP MCU 60A and the LP MCU 60B back to the pump 72 and subsequently back to the lubricant tank 76 where the cycle repeats. FIG. 4 also diagrammatically illustrates communication lines 82 that extend between the electric pump 72 and the HP MCU 60A and the LP MCU 60B, and between the HP MCU 60A and the LP MCU 60B and the HP electric motor and the LP electric motor (electric motors not shown in FIG. 4) that may be engaged with the accessory gearbox 44.

In the motor controller system 58 example shown in FIG. 4, each MCU 60A, 60B is capable of operating the electric pump 72 independently. In this manner, the motor controller system 58 has redundant lubrication / cooling system capability. It should be noted that FIG. 4 illustrates the HP MCU 60A and the LP MCU 60B as having a motor drive 64, 68 and a pump motor drive 66, 70 independent of one another to facilitate the description herein. In some embodiments, the motor drive 64, 68 and the pump motor drive 66, 70 may be unitary drive configured to perform control functions for both the electric motor and the pump 72.

Another example of a present disclosure motor controller system 58 is schematically shown in FIG. 5. In this example, the motor controller system 58 includes a first lubrication circuit 84A and a second lubrication circuit 84B. FIG. 5 also diagrammatically illustrates an accessory gearbox 44, accessories A1-A6 mounted on the accessory gearbox 44, an HP electric motor 46A engaged with the accessory gearbox 44, and an HP/LP electric motor 46B engaged with a spool coupling device 56 and the accessory gearbox 44.

The first lubrication circuit 84A is configured the same as the lubrication system 62 included in the motor controller system 58 of FIG. 4, except that the HP MCU 60A and the LP MCU 60B each have a three channel configuration in contrast to a two channel configuration. The HP MCU 60A includes a first channel for the HP motor drive 64, a second channel for a first pump motor drive 66A, and a third channel for a second pump motor drive 66B. The LP MCU 60B includes a first channel for the LP motor drive 68, a second channel for a first pump motor drive 70A, and a third channel for a second pump motor drive 70B. In this embodiment, the second pump motor drives 66B, 70B are associated with a second electric pump 172 utilized in the second circuit lubrication system 62 (e.g., the second lubrication circuit 84B).

The second lubrication circuit 84B of the motor controller system 58 shown in FIG. 5 includes a second pump 172 driven by an electric motor, a first heat exchanger 174, a second heat exchanger 274, a second lubricant tank 176, fluid flow components (e.g., a filter, oil pressure sensors for each electric motor, a flow control valve, and the like), a supply conduit system 178, and a scavenge conduit system 180.

As indicated herein, in this embodiment the HEP system 42 includes a spool coupling device 56 engaged with an accessory gearbox 44 as described in U.S. Patent Application No. 19/170,922 that is incorporated by reference herein above. The present disclosure does not require the inclusion of such a spool coupling device 56.

Still referring to FIG. 5, within the supply conduit system 178 of the second lubrication circuit 84B, the second electric pump 172 draws a flow of lubricant from the second lubricant tank 176 and directs it to the first heat exchanger 174. Between the second pump 172 and the first heat exchanger 174, the flow of lubricant passes through the filter. In this example, the first heat exchanger 174 is configured to receive the lubricant and a second fluid (e.g., main engine oil from the gas turbine engine 20) and transfer thermal energy from the lubricant to the second fluid. Hence, in this example, the first heat exchanger 174 may be referred to as an oil-to-oil heat exchanger ("OOC"). The present disclosure is not limited to any particular heat exchanger configuration.

The lubricant exiting the first heat exchanger 174 subsequently passes through the second heat exchanger 274. In this example, the second heat exchanger 274 is configured to receive the lubricant and a second fluid (e.g., bypass air from the engine's bypass air duct) and transfer thermal energy from the lubricant to the second fluid. Hence, in this example, the second heat exchanger 274 may be referred to as an air-to-oil heat exchanger ("AOC").

The flow of lubricant exiting the second heat exchanger 274 passes through fluid flow components; e.g., a fluid pressure sensor, a control valve, or the like. A portion of the flow of lubricant is directed to the HP electric motor 46A and the remainder of the flow of lubricant is directed to the HP/LP electric motor 46B. As described herein and in U.S. Patent Application No. 19/170,922, incorporated by reference herein above, the transmission disposed within the spool coupling device 56 is controllable to allow an electric motor 46 mounted on the spool coupling device 56 to be driven by the HP spool 39 or by the LP spool 37 - symbolized by the label "HP/LP Motor" shown in FIG. 5.

Within the scavenge conduit system 180 of the second lubrication circuit 84B, the second pump 172 is used to draw the flow of lubricant from the HP Motor 46A, the HP/LP Motor 46B, and spool coupling device 56 back to the second pump 172 and subsequently to back to the second lubricant tank 176 where the cycle repeats.

In the motor controller system 58 example shown in FIG. 5, each MCU 60A, 60B is capable of operating the first pump 72 and/or the second pump 172 independently. In this manner, the motor controller system 58 has redundant lubrication / cooling system capability. As indicated herein, the independent HP motor drive 64 or LP motor drive 68, the first pump motor drives 66A, 70A, and the second pump motor drive 66B, 70B are shown diagrammatically as independent components in FIG. 5 but that is not required; the motor drive and pump motor drives in an MCU 60A, 60B may be combined within a unitary drive configured to perform all the requisite control functions.

Another example of a present disclosure motor controller system 58 is schematically shown in FIG. 6. In this example, the motor controller system 58 is configured substantially the same as the motor controller system 58 detailed above and shown in FIG. 5; e.g., including a first lubrication circuit 84A and a second lubrication circuit 84B (see FIG. 5), and multichannel MCUs 60A, 60B. In this example, a single first electric pump 72 powered by a double wound electric motor that is used in the first lubrication circuit 84A of FIG. 5 is replaced by a pair of first electric pumps 72A, 72B, each powered by a single wound electric motor. In similar fashion, a single second electric pump 172 powered by a double wound electric motor that is used in the second lubrication circuit 84B of FIG. 5 is replaced by a pair of second electric pumps 172A, 172B, each powered by a single wound electric motor. The three channel HP MCU 60A and LP MCU 60B and the multiple single wound electric motor pumps provide desirable redundancy.

The present disclosure motor controller system 58 examples described herein are not intended to be limiting. Rather, these examples are intended to illustrate the utility of the present disclosure. By utilizing multiple channel MCUs and lubrication / cooling circuits with single and dual wound electric pumps, the present disclosure can be implemented in a plurality of embodiments.

While the principles of the disclosure have been described above in connection with specific apparatuses and methods, it is to be clearly understood that this description is made only by way of example and not as limitation on the scope of the disclosure. Specific details are given in the above description to provide a thorough understanding of the embodiments. However, it is understood that the embodiments may be practiced without these specific details.

It is noted that the embodiments may be described as a process which is depicted as a flowchart, a flow diagram, a block diagram, etc. Although any one of these structures may describe the operations as a sequential process, many of the operations can be performed in parallel or concurrently. In addition, the order of the operations may be rearranged. A process may correspond to a method, a function, a procedure, a subroutine, a subprogram, etc.

The singular forms "a," "an," and "the" refer to one or more than one, unless the context clearly dictates otherwise. For example, the term "comprising a specimen" includes single or plural specimens and is considered equivalent to the phrase "comprising at least one specimen." The term "or" refers to a single element of stated alternative elements or a combination of two or more elements unless the context clearly indicates otherwise. As used herein, "comprises" means "includes." Thus, "comprising A or B," means "including A or B, or A and B," without excluding additional elements.

It is noted that various connections are set forth between elements in the present description and drawings (the contents of which are included in this disclosure by way of reference). It is noted that these connections are general and, unless specified otherwise, may be direct or indirect and that this specification is not intended to be limiting in this respect. Any reference to attached, fixed, connected or the like may include permanent, removable, temporary, partial, full and/or any other possible attachment option.

No element, component, or method step in the present disclosure is intended to be dedicated to the public regardless of whether the element, component, or method step is explicitly recited in the claims. No claim element herein is to be construed under the provisions of 35 U.S.C. 112(f) unless the element is expressly recited using the phrase "means for." As used herein, the terms "comprise", "comprising", or any other variation thereof, are intended to cover a non-exclusive inclusion, such that a process, method, article, or apparatus that comprises a list of elements does not include only those elements but may include other elements not expressly listed or inherent to such process, method, article, or apparatus.

While various inventive aspects, concepts and features of the disclosures may be described and illustrated herein as embodied in combination in the exemplary embodiments, these various aspects, concepts, and features may be used in many alternative embodiments, either individually or in various combinations and sub-combinations thereof. Unless expressly excluded herein all such combinations and sub-combinations are intended to be within the scope of the present application. Still further, while various alternative embodiments as to the various aspects, concepts, and features of the disclosures--such as alternative materials, structures, configurations, methods, devices, and components, and so on--may be described herein, such descriptions are not intended to be a complete or exhaustive list of available alternative embodiments, whether presently known or later developed. Those skilled in the art may readily adopt one or more of the inventive aspects, concepts, or features into additional embodiments and uses within the scope of the present application even if such embodiments are not expressly disclosed herein. For example, in the exemplary embodiments described above within the Detailed Description portion of the present specification, elements may be described as individual units and shown as independent of one another to facilitate the description. In alternative embodiments, such elements may be configured as combined elements. It is further noted that various method or process steps for embodiments of the present disclosure are described herein. The description may present method and/or process steps as a particular sequence. However, to the extent that the method or process does not rely on the particular order of steps set forth herein, the method or process should not be limited to the particular sequence of steps described. As one of ordinary skill in the art would appreciate, other sequences of steps may be possible.

## Claims

1. A gas turbine engine, comprising:
a first spool;
a second spool;
an accessory gearbox in drive communication with the first spool and the second spool;
a first electric motor mounted on the accessory gearbox;
a second electric motor mounted on the accessory gearbox;
a motor controller system that includes:
a first motor controller unit (MCU) that includes a first motor drive and a first pump motor drive, wherein the first motor drive is in communication with the first electric motor;
a second MCU that includes a second motor drive and a second pump motor drive, wherein the second motor drive is in communication with the second electric motor; and
a lubrication system that includes a pump with an electric pump motor;
wherein the lubrication system is configured to operate in a first mode wherein the pump of the lubrication system is controlled by the first MCU and in a second mode wherein the pump of the lubrication system is controlled by the second MCU.

2. The gas turbine engine of claim 1, wherein the lubrication system is configured to direct a flow of lubricant through the first MCU and through the second MCU.

3. The gas turbine engine of claim 1 or 2, wherein the lubrication system is configured to control the pump to produce a flow of lubricant, and to direct a first portion of the flow of lubricant through the first MCU and a second portion of the flow of lubricant through the second MCU.

4. The gas turbine engine of claim 3, wherein the lubrication system is configured to pass the flow of lubricant from the pump through a heat exchanger prior to the first portion of the flow of lubricant passing through the first MCU and the second portion of the flow of lubricant passing through the second MCU.

5. The gas turbine engine of claim 4, wherein the heat exchanger utilizes engine bypass air as a coolant; and/or
wherein the lubrication system further includes a supply conduit system, a scavenge conduit system, and a lubricant tank;
wherein the supply conduit system is configured to contain the flow of lubricant from the pump to the heat exchanger, and from the heat exchanger to the first MCU and to the second MCU, from the first MCU to the pump, from the second MCU to the pump, from the pump to the lubricant tank, and from the lubricant tank to the pump.

6. The gas turbine engine of any preceding claim, wherein the electric pump motor is a single wound electric motor; or
wherein the electric pump motor is a dual wound electric motor.

7. The gas turbine engine of any preceding claim, wherein the first electric motor is in drive communication with the first spool, and the second electric motor is in drive communication with the second spool.

8. The gas turbine engine of claim 7, wherein the first spool includes a high pressure compressor section and a high pressure turbine section, and the second spool includes a low pressure compressor section and a low pressure turbine section.

9. A gas turbine engine, comprising:
a first spool;
a second spool;
an accessory gearbox in drive communication with the first spool and the second spool;
a first electric motor engaged with the accessory gearbox;
a second electric motor engaged with the accessory gearbox;
a motor controller system that includes:
a first motor controller unit (FMCU) that includes a first motor drive and an FMCU pump motor drive, wherein the first motor drive is in communication with the first electric motor;
a second motor controller unit (SMCU) that includes a second motor drive and an SMCU pump motor drive, wherein the second motor drive is in communication with the second electric motor; and
a lubrication system that includes a first pump with a first electric pump motor and a second pump with a second electric pump motor;
wherein the lubrication system includes a first lubrication circuit wherein the FMCU pump motor drive is configured to control the first electric pump motor, and a second lubrication circuit wherein the SMCU pump motor drive is configured to control the second electric pump motor.

10. The gas turbine engine of claim 9, wherein the FMCU pump motor drive includes a first FMCU pump motor drive and a second FMCU pump motor drive; and
wherein the SMCU pump motor drive includes a first SMCU pump motor drive and a second SMCU pump motor drive.

11. The gas turbine engine of claim 10, wherein the lubrication system is configured to operate within the first lubrication circuit in a first mode wherein the first pump of the lubrication system is controlled by the first FMCU pump motor drive, and in a second mode wherein the first pump of the lubrication system is controlled by the first SMCU pump motor drive.

12. The gas turbine engine of claim 10 or 11, wherein the lubrication system is configured to control the first pump to produce a first flow of lubricant, and to direct a first portion of the first flow of lubricant through the FMCU and a second portion of the first flow of lubricant through the SMCU, and optionally
wherein the lubrication system is configured to pass the first flow of lubricant from the first pump through a first heat exchanger prior to the first portion of the first flow of lubricant passing through the FMCU and the second portion of the first flow of lubricant passing through the SMCU.

13. The gas turbine engine of any of claims 9 to 12, wherein in the first lubrication circuit the first FMCU pump motor drive and the first SMCU pump motor drive are each configured to control the first electric pump motor, and in the second lubrication circuit the second FMCU pump motor drive and the second SMCU pump motor drive each are configured to control the second electric pump motor, and optionally:
wherein the lubrication system is configured to operate within the first lubrication circuit in a first mode wherein the first pump of the lubrication system is controlled by the first FMCU pump motor drive, and in a second mode wherein the first pump of the lubrication system is controlled by the first SMCU pump motor drive; and/or
wherein the lubrication system is configured to operate within the second lubrication circuit in a first mode wherein the second pump of the lubrication system is controlled by the second FMCU pump motor drive, and in a second mode wherein the second pump of the lubrication system is controlled by the second SMCU pump motor drive.

14. A gas turbine engine, comprising:
a first spool;
a second spool;
an accessory gearbox in drive communication with the first spool and the second spool;
a first electric motor engaged with the accessory gearbox;
a second electric motor engaged with the accessory gearbox;
a motor controller system that includes:
a first motor controller unit (FMCU) that includes a first motor drive, a first FMCU pump motor drive, and a second FMCU pump motor drive, wherein the first motor drive is in communication with the first electric motor;
a second motor controller unit (SMCU) that includes a second motor drive, a first SMCU pump motor drive, and a second SMCU pump motor drive, wherein the second motor drive is in communication with the second electric motor; and
a lubrication system that includes a first pump with a first electric pump motor, a second pump with a second electric pump motor, a third pump with a third electric pump motor, and a fourth pump with a fourth electric pump motor;
wherein the lubrication system includes a first lubrication circuit wherein the first FMCU pump motor drive is configured to control the first electric pump motor and the first SMCU pump motor drive is configured to control the second electric pump motor, and a second lubrication circuit wherein the second FMCU pump motor drive is configured to control the third electric pump motor, and the second SMCU pump motor drive is configured to control the fourth electric pump motor.

15. The gas turbine engine of claim 14, wherein the first electric pump motor, the second electric pump motor, the third electric pump motor, and the fourth electric pump motor are each a single wound electric motor.
